# EUROPÄISCHE PATENTSCHRIFT

(11) **EP 1 982 242 B1**
(45) Veröffentlichungstag und Bekanntmachung des Hinweises auf die Patenterteilung: **30.05.2012**
(21) Anmeldenummer: 06706807.2
(22) Anmeldetag: 10.02.2006
(51) Int. Cl.: G05B 19/042, G05B 19/43, G05B 19/048

(54) **ELEKTROFLUIDISCHE VENTILSTATION**
ELECTROFLUIDIC VALVE STATION
STATION DE VANNES ÉLECTROFLUIDIQUE

(43) Veröffentlichungstag der Anmeldung: 22.10.2008
(73) Patentinhaber: FESTO AG & Co. KG, 73734 Esslingen (DE)
(72) Erfinder: BERNER, Michael, 73230 Kirchheim/Teck (DE); HÖHN, Ralf, 70597 Stuttgart (DE); BOGDANOWICZ, Grzegorz, 73760 Ostfildern (DE)
(74) Vertreter: Kocher, Mark Werner
(86) Internationale Anmeldenummer: PCT/EP2006/001177
(87) Internationale Veröffentlichungsnummer: WO 2007/090427

(56) Entgegenhaltungen:
- EP-A- 0 603 395
- EP-A- 0 624 832
- EP-A- 1 465 029
- DE-A1- 10 020 075
- DE-C2- 3 051 184

## Beschreibung

Die Erfindung betrifft eine elektrofluidische Ventilstation, die als Einheit aus baugruppenartig zusammengefassten Komponenten besteht, mit einer an ein externes serielles Bussystem angeschlossenen oder anschließbaren Busstation, von der aus eine Steuerleitungsanordnung zu wenigstens einer aus einzelnen Magnetventilen bestehenden Ventilgruppe zu deren Betätigung der Steuersignale geführt ist.

Eine derartige Ventilstation, auch Ventilinsel genannt, ist beispielsweise aus der EP 1465029 A1 bekannt. Die Steuerung der einzelnen Ventile erfolgt von einer gegebenenfalls weit entfernten Zentrale aus über den externen Bus, der dann innerhalb der Ventilstation über einen internen Bus, dessen Steuersignale im Inneren der Ventilstation über einen internen seriellen Bus zu den Magnetventilen beziehungsweise der Ventilgruppe geführt werden. Dabei hat sich schon häufig das Bedürfnis ergeben, einzelne Ventile unabhängig von den Bussteuersignalen in Abhängigkeit von Gegebenheiten der Umgebung zu beeinflussen, das heißt zum Beispiel zu blockieren oder alternativ zu steuern.

Eine Aufgabe der vorliegenden Erfindung besteht somit darin, eine elektrofluidische Ventilstation gemäß der eingangs genannten Gattung so auszugestalten, dass in einfacher Weise eine Beeinflussung der Magnetventile der Ventilstation in Abhängigkeit von Umgebungsgegebenheiten unabhängig von den seriellen Bussignalen möglich ist.

Diese Aufgabe wird erfindungsgemäß dadurch gelöst, dass wenigstens einer Ventilgruppe eine an die Busstation angeschlossene Signalsteuervorrichtung zugeordnet ist, die mit externen Steuerleitungen verbunden oder verbindbar ist, wobei die Signalsteuervorrichtung Schaltmittel zur Blockierung und/oder Beeinflussung wenigstens eines Teils der Steuersignale in Abhängigkeit der Beschaltung oder Signalbeaufschlagung der externen Steuerleitungen aufweist.

Durch die vorliegende Erfindung kann in einfacher Weise über die an die Ventilstation angeschlossenen externen Steuerleitungen in die Steuerung der Ventile eingegriffen werden, und zwar abhängig und/oder unabhängig von den seriellen Bussteuersignalen. Beispielsweise kann dadurch eine Blockierung eines bestimmten Ventils bei unzulässiger Betätigung einer Bedienertür oder Auslösung einer Lichtschranke unabhängig vom jeweils anliegenden Steuersignal erfolgen, das über das externe Bussystem anliegt. In ähnlicher Weise kann eine Notbetätigung eines Ventils in Abhängigkeit des Ansprechens von Sicherheitseinrichtungen erfolgen, auch wenn zu der Zeit kein Betätigungssignal seitens des externen Bussystems anliegt.

Durch die in den Unteransprüchen aufgeführten Maßnahmen sind vorteilhafte Weiterbildungen und Verbesserungen der im Anspruch 1 angegebenen Ventilstation möglich.

In einer sehr einfachen Ausgestaltung besteht die Steuerleitungsanordnung aus parallelen internen Steuerleitungen, die von der Busstation über die Signalsteuervorrichtung zu den einzelnen Magnetventilen der wenigstens einen Ventilgruppe verlaufen. Die dazwischengeschaltete Signalsteuervorrichtung braucht zur Blockierung eines Ventils beispielsweise lediglich eine solche Steuerleitung zu unterbrechen, wobei die unterbrochene Stelle über externe Steuerleitungen verbindbar ist, beispielsweise mittels eines externen Schalters.

Bei einer komfortableren Ausgestaltung besteht die Steuerleitungsanordnung aus einer internen seriellen Busleitungsanordnung, die zwischen der Busstation und einer Decodiereinrichtung in der Signalsteuervorrichtung verläuft, sowie aus parallelen Steuerleitungen, die von der Decodiereinrichtung über die Schaltmittel der Signalsteuervorrichtung zu den einzelnen Magnetventilen der wenigstens einen Ventilgruppe verlaufen. Mittels der internen seriellen Busleitungsanordnung können ohne größeren Verdrahtungsaufwand mehrere Ventilgruppen angesteuert werden, die auch nur teilweise jeweils mit einer Signalsteuervorrichtung zur Beeinflussung der Ventile versehen sein können. In vorteilhafter Weise können dabei trotz des Vorhandenseins der internen seriellen Busleitungsanordnung, die durch alle Komponenten der Ventilstation, also beispielsweise durch mehrere Ventilgruppen, verläuft, gezielt einzelne Ventile von einzelnen Gruppen in einfacher Weise extern beeinflusst beziehungsweise gesteuert werden, auch unabhängig von den Bussteuersignalen.

Die Signalsteuervorrichtung ist zweckmäßigerweise als Baugruppenkomponente neben der zugeordneten Ventilgruppe angeordnet, sodass die Ventilstation dadurch baukastenartig zusammengefügt werden kann, je nachdem, welche Funktionen gewünscht oder erforderlich sind.

Zum Anschluss der externen Steuerleitungen besitzt die Signalsteuervorrichtung bevorzugt einen elektrischen Mehrpolanschluss.

Die Schaltmittel in der Signalsteuervorrichtung bestehen in einer vorteilhaften Ausgestaltung aus einzelnen Schalteinheiten, von denen wenigstens eine an ein zugeordnetes Magnetventil der Ventilgruppe sowie an die diesem Magnetventil zugeordnete interne Steuerleitung der Steuerleitungsanordnung angeschlossen ist. Die externen Steuerleitungen sind an diese Schalteinheiten zur wahlweisen Trennung oder Verbindung zwischen dem jeweiligen Magnetventil und der internen Steuerleitung (UND-Verknüpfung) oder zur alternativen Einschaltung des jeweiligen Magnetventils (ODER-Verknüpfung) oder zur ausschließlichen externen Betätigung des jeweiligen Magnetventils angeschlossen. Dabei kann ein Teil der Schalteinheiten ständige Verbindungen zwischen dem jeweiligen Magnetventil und der zugeordneten internen Steuerleitung zur ausschließlichen Betätigung des Magnetventils über die interne Steuerleitung aufweisen.

Zur Herstellung der jeweiligen Verbindungen in den einzelnen Schalteinheiten sind zweckmäßigerweise Verbindungselemente vorgesehen, die als Steckverbinder, Lötverbinder oder Verbindungsschalter ausgebildet sind, je nachdem, ob feste Beeinflussungsfunktionen oder variable Beeinflussungsfunktionen in den jeweiligen Schalteinheiten erwünscht sind.

Die internen Steuerleitungen können direkt galvanisch oder galvanisch getrennt an die Schalteinheiten angeschlossen sein, wobei zum galvanisch getrennten Anschluss ein steuerbares Kopplungsglied, insbesondere ein Optokoppler, vorgesehen ist. Dies hängt nicht zuletzt von der geforderten Potentialtrennung ab.

In einer alternativen Ausgestaltung bestehen die Schaltmittel in der Signalsteuervorrichtung aus einzelnen Schalteinheiten, von denen wenigstens eine zur Verbindung der zugeordneten externen Steuerleitungen mit dem Steuereingang eines steuerbaren Kopplungsglieds, insbesondere eines Optokopplers, ausgebildet ist, der als Schaltglied zwischen das zugeordnete Magnetventil und die zugeordnete interne Steuerleitung der Steuerleitungsanordnung geschaltet ist. Mit dieser Ausführung, lässt sich auch bei galvanisch getrenntem Anschluss eine Blockierung der internen Steuersignale realisieren.

Die Busstation und die wenigstens eine Ventilgruppe sind in vorteilhafter Ausgestaltung jeweils als Baugruppenkomponente ausgebildet und zu einer Einheit zusammengefügt, beispielsweise aneinander aufgereiht.

Ausführungsbeispiele der Erfindung sind in der Zeichnung dargestellt und in der nachfolgenden Beschreibung näher erläutert. Es zeigen:
- Figur 1: ein erstes Ausführungsbeispiel einer elektrofluidischen Ventilstation als Blockschaltbild mit einem internen seriellen Bus,
- Figur 2: ein zweites Ausführungsbeispiel einer elektrofluidischen Ventilstation mit internen parallelen Signalleitungen,
- Figur 3: alternative Beschaltungen einer Schalteinheit der Signalsteuervorrichtung bei festen galvanischen Verbindungen,
- Figur 4: weitere alternative Beschaltungen einer Schalteinheit der Signalsteuervorrichtung bei galvanisch getrennter Zuführung der internen Steuerleitung über einen Optokoppler und
- Figur 5: eine weitere alternative Beschaltung einer Schalteinheit der Signalsteuervorrichtung bei galvanischer Trennung von interner Steuerleitung und Magnetventil einerseits und externer Steuerleitungen andererseits.

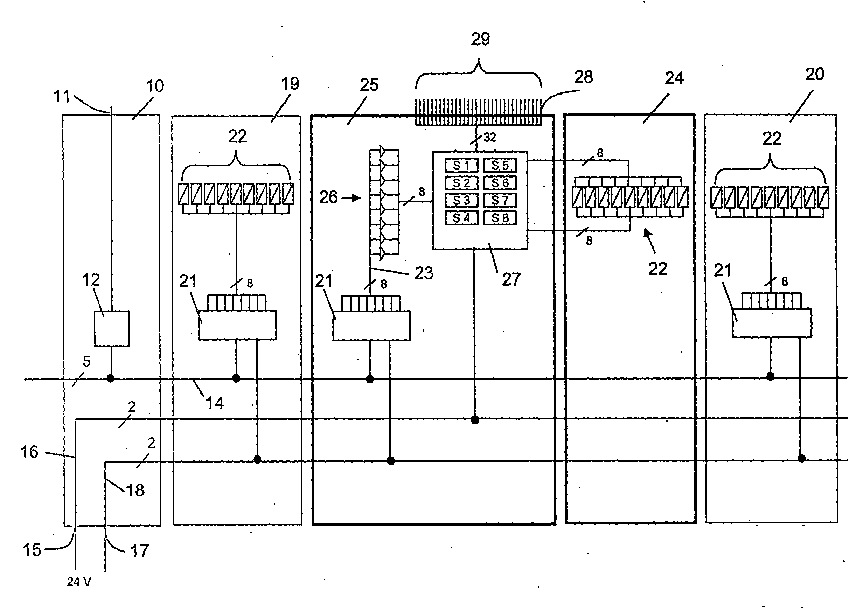

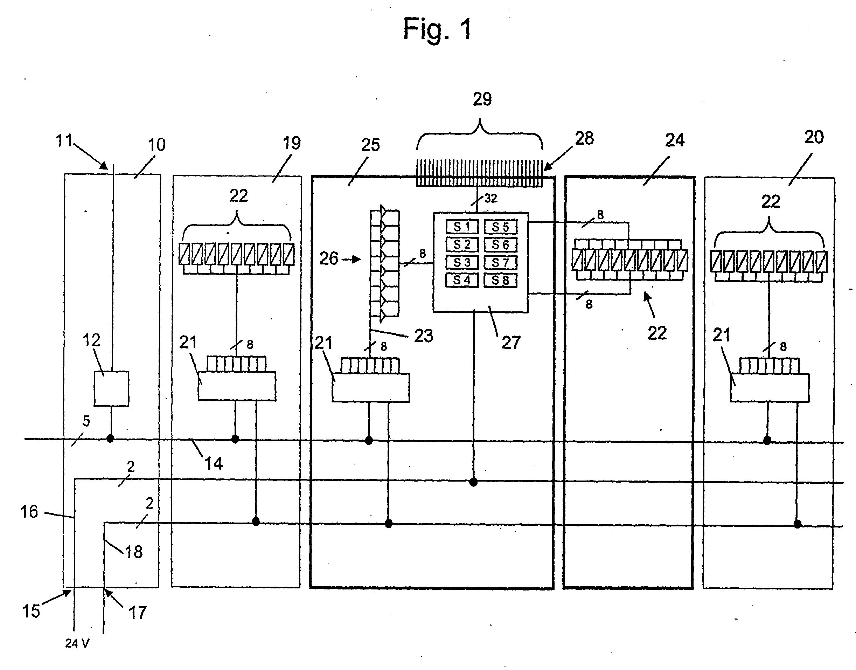

Bei dem in Figur 1 dargestellten ersten Ausführungsbeispiel besteht eine elektrofluidische Ventilstation aus fünf baugruppenartig aneinandergereihten Komponenten.

Die erste Komponente ist eine Busstation 10, die einen Anschluss 11 zum Anschließen eines externen seriellen Busses besitzt. Die Busstation 10 enthält im Wesentlichen einen Busknoten oder Buswandler 12, durch den die Signale des externen Busses in serielle Signale für einen daran angeschlossenen internen seriellen Bus 14 umgesetzt werden. Der interne Bus 14 besteht aus fünf Leitungen und ist beispielsweise als C-Bus ausgebildet. Er erstreckt sich durch alle Komponenten der Ventilstation hindurch. Die fünf Leitungen können beispielsweise zwei Datenbusleitungen H und L, eine Konfigurationsleitung, eine 5V-Leitung und eine Masseleitung sein. Selbstverständlich können hier auch andere bekannte serielle Bussysteme eingesetzt werden, die eine andere Zahl von Einzelleitungen aufweisen.

Weiterhin besitzt die Busstation 10 einen Versorgungsspannungsanschluss 15 für eine Versorgungsspannung von beispielsweise 24 Volt zur Betätigung von Magnetventilen, von dem aus sich eine aus zwei Einzelleitungen bestehende Versorgungsleitung 16 durch alle Komponenten der Ventilstation erstreckt. Weiterhin besitzt die Busstation 10 noch einen zweiten Versorgungsspannungsanschluss 17 zur Versorgung der elektronischen Komponenten der Ventilstation beispielsweise mit einer stabilisierten Spannung. Von diesem zweiten Versorgungsspannungsanschluss 17 aus erstreckt sich eine ebenfalls aus zwei Einzelleitungen bestehende Versorgungsleitung 18 durch alle Komponenten der Ventilstation zur Versorgung der entsprechenden Elektronikbausteine.

Zwei weitere Komponenten der Ventilstation sind als Ventilgruppenkomponenten 19, 20 ausgebildet, wie sie beispielsweise aus dem eingangs angegebenen Stand der Technik bekannt sind. Die Zahl solcher anschließbaren Ventilgruppenkomponenten 19, 20 kann auch größer oder kleiner sein, oder sie können auch ganz entfallen. Sie bestehen jeweils aus einer an den internen Bus 14 angeschlossenen Decodiereinrichtung 21 zur Umwandlung der seriellen Signale in parallele Steuersignale für Magnetventile 22 der jeweiligen Ventilgruppenkomponente 19 beziehungsweise 20. Beim Ausführungsbeispiel sind das jeweils acht Magnetventile 22, sodass von der Decodiereinrichtung 21 acht interne Steuerleitungen zu den Magnetventilen 22 führen. Auch diese Zahl kann größer oder kleiner sein. Die Decodiereinrichtung 21 wird über die Versorgungsleitung 18 mit der erforderlichen Versorgungsspannung beaufschlagt.

Eine weitere Ventilgruppenkomponente 24 enthält ebenfalls acht Magnetventile 22, ist jedoch nicht direkt, sondern über eine Signalsteuervorrichtung 25 als weitere Komponente der Ventilstation an den internen Bus 14 angeschlossen. Hierzu besitzt die Signalsteuervorrichtung 25 ebenfalls eine an den internen Bus 14 angeschlossene Decodiereinrichtung 21, deren acht ausgangsseitige interne Signalleitungen für parallele Steuersignale über eine Treiberanordnung 26 und über eine Schalteinrichtung 27 mit den Magnetventilen 27 der Ventilgruppenkomponente 24 verbunden sind.

Die Ventilgruppenkomponenten 19, 20 können selbstverständlich in gleicher Weise entsprechende Treiberanordnungen 26 besitzen, wobei auch dort die Magnetventile selbstverständlich in gleicher Weise mit der Versorgungsspannung der Versorgungsleitung 16 verbunden sind, was zur Vereinfachung nicht dargestellt ist.

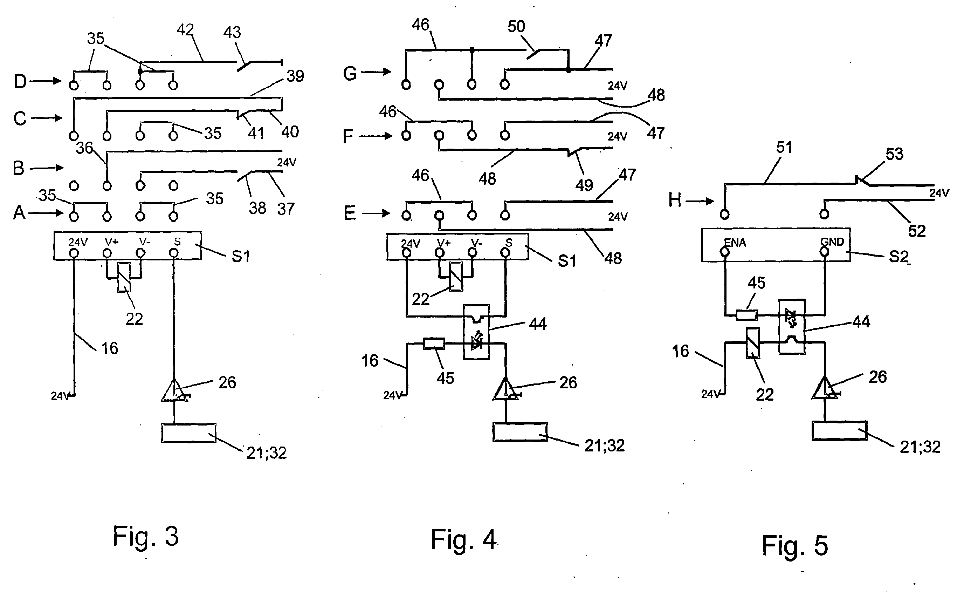

Die Schalteinrichtung 27 besteht aus einer der Zahl der Magnetventile 22 in der Ventilgruppenkomponente 24 entsprechenden Zahl von Schalteinheiten S1 bis S8, die in Verbindung mit den Figuren 3 bis 5 näher erläutert werden. Jede der acht internen Steuerleitungen der Decodiereinrichtung 21 ist mit einer der Schalteinheiten S1 bis S8 verbunden, wobei auch jedes Magnetventil 22 der Ventilgruppenkomponente 24 mit einer der Schalteinheiten S1 bis S8 verbunden ist. An jede Schalteinheit S1 bis S8 können über einen Mehrpolanschluss 28 maximal vier externe Steuerleitungen angeschlossen werden, sodass ein externes Steuerleitungskabel 29 maximal zweiunddreißig Steuerleitungen enthält, um interne Steuersignale seitens der Decodiereinrichtung 21 entweder zu blockieren oder auf sonstige Weise zu beeinflussen. Dies wird in Verbindung mit den Figuren 3 bis 5 näher erläutert.

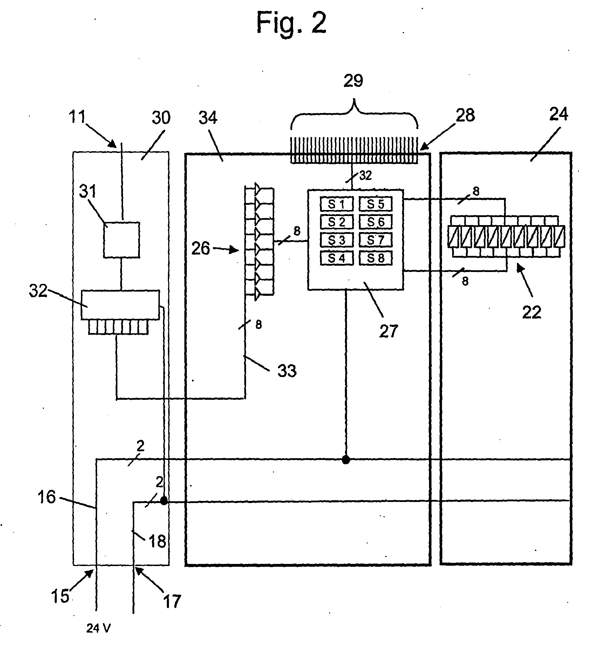

Das in Figur 2 dargestellte zweite Ausführungsbeispiel ist ähnlich wie das erste Ausführungsbeispiel aufgebaut, wobei gleiche oder gleichwirkende Bauteile oder Baugruppen oder Komponenten mit denselben Bezugszeichen versehen und nicht nochmals beschrieben sind. Eine Busstation 30 besitzt ebenfalls einen Anschluss 11 für einen externen Bus, besitzt jedoch im Unterschied zum ersten Ausführungsbeispiel einen Busknoten oder Buswandler 31, der mit einer Decodiereinrichtung 32 versehen ist, um die externen seriellen Bussignale direkt in interne parallele Signale umzuwandeln. Der Buswandler 31 und die Decodiereinrichtung 32 können daher auch als integrierte Komponente ausgebildet sein, die im Wesentlichen als Decodiereinrichtung ausgebildet ist.

Von der Decodiereinrichtung 32 verlaufen acht parallele interne Steuerleitungen 33 zu einer abgewandelten Signalsteuervorrichtung 34 und dort über die Treiberanordnung 26 zur Schalteinrichtung 27. An diese ist, wie beim ersten Ausführungsbeispiel, eine Ventilgruppenkomponente 24 angeschlossen.

Die Komponenten der Ventilstationen gemäß dem ersten und dem zweiten Ausführungsbeispiel sind aneinandergereiht und beispielsweise so aneinandergesteckt, dass die entsprechenden Versorgungs- und Signalleitungen von aneinander liegenden Komponenten automatisch über entsprechende Steckvorrichtungen, die nicht dargestellt sind, verbunden werden. Die fluidischen Elemente der Ventilgruppenkomponenten 19, 20 und 24, also die fluidischen Zuleitungen, Ableitungen sowie individuellen Leitung für und zu den einzelnen Magnetventilen 22, sind zur Vereinfachung der Darstellung ebenfalls nicht abgebildet.

In Figur 3 ist eine der Schalteinheiten S1 bis S8, nämlich die Schalteinheit S1, stellvertretend für alle Schalteinheiten detaillierter dargestellt. Zur Beeinflussung der internen Steuersignale sind vier Beschaltungsmöglichkeiten als Alternativen dargestellt. Diese Schalteinheit S1 besitzt vier Anschlüsse, nämlich einen 24V-Anschluss, der mit der Versorgungsleitung 16 verbunden ist, zwei Ventilanschlüsse V+ und V-, an die das zugehörige Magnetventil 22 angeschlossen ist, sowie einen Steuersignalanschluss S, an den die jeweilige interne Steuerleitung 23 angeschlossen ist.

Eine erste Beschaltungsalternative A besteht darin, dass der 24V-Anschluss mit dem Anschluss V+ und der Anschluss V- mit dem Anschluss S jeweils über Brückenglieder 35 miteinander verbunden sind. Diese Brückenglieder 35 können als Steckverbinder, Lötverbinder oder Verbindungsschalter ausgebildet sein. Bei dieser Beschaltungsalternative ist keine externe Steuerleitung angeschlossen, und das interne Steuersignal ist nicht von außen beeinflussbar.

Bei der Beschaltungsalternative B sind lediglich an die beiden Anschlüsse V+ und V- externe Steuerleitungen 36, 37 angeschlossen, über die extern und über einen Schalter 38 die für das Magnetventil 22 erforderliche Versorgungsspannung anlegbar ist. Bei dieser Beschaltungsalternative ist das Magnetventil 22 ausschließlich extern betätigbar, und das interne Steuersignal ist völlig unwirksam.

Bei der Beschaltungsalternative C sind zwei externe Steuerleitungen 39, 40 an den 24V-Anschluss und an den Anschluss V+ angeschlossen und extern über einen Schalter 41 miteinander verbindbar. Die Anschlüsse V- und S sind über ein Brückenglied 35 miteinander verbunden. Diese Beschaltungsalternative realisiert eine UND-Verknüpfung zwischen dem internen Steuersignal und der externen Beschaltung, das heißt, nur wenn der Schalter 41 geschlossen ist und gleichzeitig ein internes Steuersignal anliegt, wird das Magnetventil 22 betätigt.

Bei der weiteren Beschaltungsalternative D ist der 24V-Anschluss mit dem Anschluss V+ über ein Brückenglied 35 verbunden, und der Anschluss V- ist sowohl mit einer externen Steuerleitung 42 als auch über ein Brückenglied 35 mit dem Anschluss S verbunden. Die externe Steuerleitung 42 ist über einen Schalter 43 mit dem Massepol beziehungsweise Minuspol verbunden. Diese Beschaltungsalternative realisiert eine ODER-Verknüpfung, das heißt, das Magnetventil 22 kann sowohl durch ein internes Steuersignal als auch unabhängig davon durch Schließen des externen Schalters 43 betätigt werden.

Bei der Ausführungsvariante gemäß Figur 4 ist eine galvanische Entkopplung zwischen der internen Steuerleitung 23 einerseits und der externen Steuerleitung beziehungsweise dem jeweiligen Magnetventil 22 andererseits realisiert. Das jeweilige Magnetventil 22 ist wiederum mit den Anschlüssen V+ und V- verbunden. Der 24V-Anschluss ist mit dem Anschluss S über die Schaltstrecke eines Optokopplers 44 verbunden. Die interne Steuerleitung 23 ist mit der Versorgungsleitung 16 über die Reihenschaltung eines Widerstands 45 und der Steuerstrecke des Optokopplers 44 verbunden. Anstelle eines Optokopplers kann prinzipiell auch ein anderer galvanisch trennender Koppler eingesetzt werden.

Bei einer Beschaltungsalternative E ist der 24V-Anschluss mit dem Anschluss V- über ein Brückenglied 46 verbunden. Die beiden übrigen Anschlüsse V+ und S sind über externe Steuerleitungen 47, 48 mit einer Versorgungsspannung für das Magnetventil 22 beaufschlagt. Bei ständig anliegender Versorgungsspannung entspricht diese Beschaltungsalternative in ihrer Wirkung der Beschaltungsalternative A, das heißt, das Magnetventil 22 kann ausschließlich durch das interne Steuersignal betätigt werden.

Eine weitere Beschaltungsalternative F entspricht weitgehend der Beschaltungsalternative E. Lediglich kann eine der externen Steuerleitungen 48 durch einen Schalter 49 unterbrochen werden. Diese Beschaltungsalternative F realisiert dadurch eine UND-Verknüpfung ähnlich der Beschaltungsalternative C, das heißt, nur wenn ein internes Steuersignal anliegt und gleichzeitig der Schalter 49 geschlossen ist, wird das Magnetventil 22 betätigt.

Bei einer weiteren Beschaltungsalternative G sind wiederum die Anschlüsse V+ und S mittels externer Steuerleitungen 47, 48 mit einer externen Versorgungsspannung beaufschlagt. Der 24V-Anschluss ist mit dem Anschluss V- über ein Brückenglied 46 verbunden und gleichzeitig über einen Schalter 50 an die externe Steuerleitung 47 angeschlossen. Diese Beschaltungsalternative G realisiert dadurch eine ODER-Verknüpfung ähnlich der Beschaltungsalternative D, das heißt, sowohl durch ein internes Steuersignal als auch unabhängig davon kann das Magnetventil 22 durch Schließen des Schalters 50 betätigt werden.

Bei der in Figur 5 dargestellten Ausführung einer Schalteinheit S2, wobei es sich auch um andere Schalteinheiten handeln kann, besitzt diese lediglich zwei Anschlüsse ENA und GND. An diese ist über externe Steuerleitungen 51, 52 eine externe Versorgungsspannung mittels eines externen Schalters 53 anlegbar. Die beiden Anschlüsse ENA und GND sind dabei intern über die Reihenschaltung des Widerstands 45 mit der Steuerstrecke des Optokopplers 44 miteinander verbunden. Die interne Steuerleitung 23 ist mit der Versorgungsleitung 16 über die Reihenschaltung des Magnetventils 22 mit der Schaltstrecke des Optokopplers 44 verbunden. Bei dieser Beschaltungsalternative ist auch das Magnetventil galvanisch von den externen Steuerleitungen entkoppelt, wobei die Beschaltungsalternative H wiederum eine UND-Verknüpfung darstellt, das heißt, nur bei gleichzeitigem Anliegen eines internen Steuersignals und geschlossenem externen Schalter 53 wird das Magnetventil 22 betätigt.

Kombinationen zwischen den beschriebenen Beschaltungsalternativen A bis H sind selbstverständlich möglich. Die Schalteinheiten S1 bis S8 einer Schalteinrichtung 27 können identisch oder untereinander verschieden gemäß den Figuren 3 bis 5 ausgebildet sein. Der Mehrpolanschluss 28 kann dabei mit den Anschlüssen der schalteinheiten S1 bis S8 fest oder variabel verdrahtet sein, beispielsweise auch über Schalter oder Schalteinrichtungen. Die externen Steuerleitungen 36, 37, 39, 40, 42, 47, 48, 51 und 52 sind im externen Steuerleitungskabel 29 enthalten.

Bei dem in Figur 2 dargestellten zweiten Ausführungsbeispiel kann eine einfache UND-Verknüpfung auch dadurch erreicht werden, dass die internen Steuerleitungen 23 zu den Magnetventilen 22 über zweipolige Schalteinheiten geführt werden, wobei die beiden Pole über externe Steuerleitungen, die über externe Schalter miteinander verbunden sind, verbindbar oder unterbrechbar sind.

## Patentansprüche

1. Elektrofluidische Ventilstation, die als Einheit aus baugruppenartig zusammengefassten Komponenten besteht, mit einer an ein externes serielles Bussystem angeschlossenen oder anschließbaren Busstation (10; 30), von der aus eine Steuerleitungsanordnung zu wenigstens einer aus einzelnen Magnetventilen (22) bestehenden Ventilgruppe (19, 20, 24) zu deren Betätigung durch Steuersignale geführt ist, wobei wenigstens einer Ventilgruppe (24) eine an die Busstation (10; 30) angeschlossene Signalsteuervorrichtung (25; 34) zugeordnet ist, **dadurch gekennzeichnet, dass** die Signalsteuervorrichtung (25; 34) außer mit der Steuerleitungsanordnung, die von der Busstation (10; 30) zu wenigstens einer Ventilgruppe (19, 20, 24) geführt ist, noch mit externen Steuerleitungen (29) verbunden oder verbindbar ist und Schaltmittel (27) zur Blockierung und/oder Beeinflussung wenigstens eines Teils der Steuersignale auf der Steuerleitungsanordnung in Abhängigkeit der Beschaltung oder Signalbeaufschlagung der externen Steuerleitungen (29) aufweist.

2. Elektrofluidische Ventilstation nach Anspruch 1, **dadurch gekennzeichnet, dass** die Steuerleitungsanordnung (33) aus parallelen internen Steuerleitungen besteht, die von der Busstation (30) über die Signalsteuervorrichtung (34) zu den einzelnen Magnetventilen (22) der wenigstens einen Ventilgruppe (24) verlaufen.

3. Elektrofluidische Ventilstation nach Anspruch 1, **dadurch gekennzeichnet, dass** die Steuerleitungsanordnung aus einer internen seriellen Busleitungsanordnung (14) besteht, die zwischen der Busstation (10) und einer Decodiereinrichtung (21) in der Signalsteuervorrichtung (25) verläuft, sowie aus parallelen Steuerleitungen (23), die von der Decodiereinrichtung (21) über die Schaltmittel (27) der Signalsteuervorrichtung (25) zu den einzelnen Magnetventilen (22) der wenigstens einen Ventilgruppe verlaufen.

4. Elektrofluidische Ventilstation nach Anspruch 3, **dadurch gekennzeichnet, dass** die interne serielle Busleitungsanordnung (14) zu allen Ventilgruppen (19, 20, 24) verläuft, unter denen insbesondere auch wenigstens eine Ventilgruppe (19, 20) ist, die keine zugeordnete Signalsteuervorrichtung (25) besitzt.

5. Elektrofluidische Ventilstation nach einem der vorhergehenden Ansprüche, **dadurch gekennzeichnet, dass** die Signalsteuervorrichtung (25; 34) als Baugruppenkomponente neben der zugeordneten Ventilgruppe (24) angeordnet ist.

6. Elektrofluidische Ventilstation nach einem der vorhergehenden Ansprüche, **dadurch gekennzeichnet, dass** die Signalsteuervorrichtung (25) einen elektrischen Mehrpolanschluss (28) zum Anschließen der externen Steuerleitungen (29) besitzt.

7. Elektrofluidische Ventilstation nach einem der vorhergehenden Ansprüche, **dadurch gekennzeichnet, dass** die Schaltmittel (27) in der Signalsteuervorrichtung (25; 34) aus einzelnen Schalteinheiten (S1 - S8) bestehen, von denen wenigstens eine an ein zugeordnetes Magnetventil (22) der Ventilgruppe (24) sowie an die diesem Magnetventil zugeordnete interne Steuerleitung (23) der Steuerleitungsanordnung angeschlossen ist, und dass die externen Steuerleitungen (29) an diese Schalteinheiten (S1 - S8) zur wahlweisen Trennung oder Verbindung zwischen dem jeweiligen Magnetventil (22) und der internen Steuerleitung (23) (UND-Verknüpfung) oder zur alternativen Einschaltung des jeweiligen Magnetventils (22) (ODER-Verknüpfung) oder zur ausschließlichen externen Betätigung des jeweiligen Magnetventils (22) angeschlossen sind.

8. Elektrofluidische Ventilstation nach Anspruch 7, **dadurch gekennzeichnet, dass** wenigstens ein Teil der Schalteinheiten (S1 - S8) ständige Verbindungen zwischen dem jeweiligen Magnetventil (22) und der zugeordneten internen Steuerleitung zur ausschließlichen Betätigung des Magnetventils (22) über die interne Steuerleitung aufweist.

9. Elektrofluidische Ventilstation nach Anspruch 7 oder 8, **dadurch gekennzeichnet, dass** zur Herstellung der jeweiligen Verbindungen in den einzelnen Schalteinheiten (S1 - S8) Verbindungselemente (35; 46) vorgesehen sind, die als Steckverbinder, Lötverbinder oder Verbindungsschalter ausgebildet sind.

10. Elektrofluidische Ventilstation nach einem der Ansprüche 7 bis 9, **dadurch gekennzeichnet, dass** die internen Steuerleitungen (23; 33) direkt galvanisch oder galvanisch getrennt an die Schalteinheiten (S1 *-* S8) angeschlossen sind, wobei zum galvanisch getrennten Anschluss ein steuerbares Kopplungsglied (44), insbesondere ein Optokoppler, vorgesehen ist.

11. Elektrofluidische Ventilstation nach einem der Ansprüche 1 bis 6, **dadurch gekennzeichnet, dass** die Schaltmittel (27) in der Signalsteuervorrichtung (25; 34) aus einzelnen Schalteinheiten (S1 - S8) bestehen, von denen wenigstens eine zur Verbindung der zugeordneten externen Steuerleitungen (29) mit dem Steuereingang eines steuerbaren Kopplungsglieds (44), insbesondere eines Optokopplers, ausgebildet ist, der als Schaltglied zwischen das zugeordnete Magnetventil (22) und die zugeordnete interne Steuerleitung (23; 33) der Steuerleitungsanordnung geschaltet ist.

12. Elektrofluidische Ventilstation nach einem der vorhergehenden Ansprüche, **dadurch gekennzeichnet, dass** die Busstation (10; 30) und die wenigstens eine Ventilgruppe (19, 20, 24) jeweils als Baugruppenkomponente ausgebildet sind.

## Claims

1. Electro-fluidic valve station, comprising a unit made up of components assembled in modular form, with a bus station (10; 30) connected or connectable to an external serial bus system and from which a control line assembly is led to at least one valve group (19, 20, 24) comprised of individual solenoid valves (22) for their actuation by control signals, wherein at least one valve group (24) is assigned a signal control unit (25; 34) connected to the bus station (10; 30), **characterised in that** the signal control unit (25; 34), apart from connection to the control line assembly which is led from the bus station (10; 30) to at least one valve group (19, 20, 24), is also connected or connectable to external control lines (29) and has switching means (27) for blocking and/or influencing at least a portion of the control signals on the control line assembly, depending on the wiring or signal loading of the external control lines (29).

2. Electro-fluidic valve station according to claim 1, **characterised in that** the control line assembly (33) is comprised of parallel internal control lines which run from the bus station (30) via the signal control unit (34) to the individual solenoid valves (22) of the valve group or groups (24).

3. Electro-fluidic valve station according to claim 1, **characterised in that** the control line assembly is comprised of an internal serial bus line assembly (14) which runs between the bus station (10) and a decoding device (21) in the signal control unit (25), together with parallel control lines (23) which run from the decoding device (21) via the switching means (27) of the signal control unit (25) to the individual solenoid valves (22) of the valve group or groups.

4. Electro-fluidic valve station according to claim 3, **characterised in that** the internal serial bus line assembly (14) runs to all valve groups (19, 20, 24), which also include in particular at least one valve group (19, 20) which has no assigned signal control unit (25).

5. Electro-fluidic valve station according to any of the preceding claims, **characterised in that** the signal control unit (25; 34) is mounted as a module component adjacent to the assigned valve group (24).

6. Electro-fluidic valve station according to any of the preceding claims, **characterised in that** the signal control unit (25) has an electrical multipole connection (28) for the connection of the external control lines (29).

7. Electro-fluidic valve station according to any of the preceding claims, **characterised in that** the switching means (27) in the signal control unit (25; 34) consist of individual switching units (S1 - S8), of which at least one is connected to an assigned solenoid valve (22) of the valve group (24) and also to the assigned internal control line (23) of the control line assembly, and that the external control lines (29) are connected to these switching units (S1 - S8) for alternate isolation or connection between the respective solenoid valve (22) and the internal control line (23) (AND operation) or for the alternative closing operation of the respective solenoid valve (22) (OR operation) or for the solely external actuation of the respective solenoid valve (22).

8. Electro-fluidic valve station according to claim 7, **characterised in that** at least one section of the switching units (S1 - S8) has constant connections between the respective solenoid valve (22) and the assigned internal control line for the exclusive actuation of the solenoid valve (22) via the internal control line.

9. Electro-fluidic valve station according to claim 7 or 8 **characterised in that**, to create the relevant connections in the individual switching units (S1 - S8), connecting elements (35; 46) are provided in the form of plug connectors, solder connectors or connecting switches.

10. Electro-fluidic valve station according to any of claims 7 to 9, **characterised in that** the internal control lines (23; 33) are directly galvanically connected or galvanically isolated at the switching units (S1 - S8), wherein for the galvanically isolated connection a controllable coupling element (44), in particular an optocoupler, is provided.

11. Electro-fluidic valve station according to any of claims 1 to 6, **characterised in that** the switching means (27) in the signal control unit (25; 34) consist of individual switching units (S1 - S8), of which at least one is designed for connection of the assigned external control lines (29) to the control input of a controllable coupling element (44), in particular an optocoupler, which is connected as a switching device between the assigned solenoid valve (22) and the assigned internal control line (23; 33) of the control line assembly.

12. Electro-fluidic valve station according to any of the preceding claims, **characterised in that** the bus station (10; 30) and the valve group or groups (19, 20, 24) are each in the form of module components.

## Revendications

1. Station de vannes électrofluidique, qui se compose comme une unité de composants rassemblés à la façon de modules, comportant une station de bus (10 ; 30) raccordée ou pouvant être raccordée à un système de bus externe en série, depuis laquelle un ensemble de lignes de commande est guidé vers au moins un groupe de vannes (19, 20, 24) se composant d'électrovannes (22) individuelles pour leur actionnement par des signaux de commande, un dispositif de commande des signaux (25 ; 34) raccordé à la station de bus (10 ; 30) étant associé au moins au groupe de vannes (24), **caractérisée en ce que** le dispositif de commande des signaux (25 ; 34) est relié ou peut être relié hormis à l'ensemble de lignes de commande, qui est guidé depuis la station de bus (10 ; 30) vers au moins un groupe de vannes (19, 20, 24), également aux lignes de commande externes (29) et présente des moyens de commutation (27) servant à bloquer et/ou à influer au moins une partie des signaux de commande sur l'ensemble de lignes de commande en fonction de la disposition des lignes externes de commande (29) ou de l'exposition de ces dernières aux signaux.

2. Station de vannes électrofluidique selon la revendication 1, **caractérisée en ce que** l'ensemble de lignes de commande (33) se compose de lignes de commande internes parallèles, qui s'étendent depuis la station de bus (30) en passant par le dispositif de commande des signaux (34) en direction des électrovannes (22) individuelles du groupe de vannes (24) au moins au nombre de un.

3. Station de vannes électrofluidique selon la revendication 1, **caractérisée en ce que** l'ensemble de lignes de commande se compose d'un ensemble de lignes de bus (14) interne en série, qui s'étend entre la station de bus (10) et un système de décodage (21) dans le dispositif de commande des signaux (25), ainsi que de lignes de commande (23) parallèles, qui s'étendent depuis le système de décodage (21) vers les électrovannes (22) individuelles du groupe de vannes au moins au nombre de un par l'intermédiaire des moyens de commutation (27) du dispositif de commande des signaux (25).

4. Station de vannes électrofluidique selon la revendication 3, **caractérisée en ce que** l'ensemble de lignes de bus interne en série (14) s'étend vers tous les groupes de vannes (19, 20, 24), parmi lesquels se trouve en particulier également au moins un groupe de vannes (19, 20), qui ne possède aucun dispositif de commande des signaux (25) associé.

5. Station de vannes électrofluidique selon l'une quelconque des revendications précédentes, **caractérisée en ce que** le dispositif de commande des signaux (25 ; 34) est disposé comme composant de modules à côté du groupe de vannes (24) associé.

6. Station de vannes électrofluidique selon l'une quelconque des revendications précédentes, **caractérisée en ce que** le dispositif de commande des signaux (25) possède un raccordement électrique multipolaire (28) servant à raccorder les lignes de commande externes (29).

7. Station de vannes électrofluidique selon l'une quelconque des revendications précédentes, **caractérisée en ce que** les moyens de commutation (27) du dispositif de commande des signaux (25 ; 34) se composent d'unités de commutation individuelles (S1 - S8), parmi lesquelles au moins une unité de commutation est raccordée à une électrovanne (22) du groupe de vannes (24) associée ainsi qu'à la ligne de commande (23) interne de l'ensemble de lignes de commande, associée à cette électrovanne, et **en ce que** les lignes de commande (29) externes sont raccordées à ces unités de commutation (S1 - S8) pour séparer de manière sélective ou pour relier l'électrovanne (22) respective et la ligne de commande (23) interne (liaison ET) ou pour la mise en circuit alternative de l'électrovanne respective (22) (liaison OU) ou pour l'actionnement externe exclusif de l'électrovanne (22) respective.

8. Station de vannes électrofluidique selon la revendication 7, **caractérisée en ce qu'**au moins une partie des unités de commutation (S1 - S8) présente des liaisons permanentes entre l'électrovanne (22) respective et la ligne de commande interne associée pour actionner exclusivement l'électrovanne (22) par l'intermédiaire de la ligne de commande interne.

9. Station de vannes électrofluidique selon la revendication 7 ou 8, **caractérisée en ce que** sont prévus, pour la fabrication des liaisons respectives dans les unités de commutation (S1 - S8) individuelles des éléments de liaison (35 ; 46), qui sont réalisés comme des connecteurs, des connecteurs par brasage ou des commutateurs de liaison.

10. Station de vannes électrofluidique selon l'une quelconque des revendications 7 à 9, **caractérisée en ce que** les lignes de commande interne (23 ; 33) sont raccordées de manière directement galvanique ou de manière galvaniquement séparée aux unités de commutation (S1 - S8), un organe de couplage (44) pouvant être commandé, en particulier un optocoupleur, étant prévu pour le raccordement galvaniquement séparé.

11. Station de vannes électrofluidique selon l'une quelconque des revendications 1 à 6, **caractérisée en ce que** les moyens de commutation (27) du dispositif de commande des signaux (25 ; 34) se composent d'unités de commutation individuelles (S1 - S8), parmi lesquelles au moins une unité de commutation est réalisée pour relier les lignes de commande externes associées (29) et l'entrée de commande d'un organe de couplage (44) pouvant être commandé, en particulier d'un optocoupleur, qui est commuté comme organe de commutation entre l'électrovanne (22) associée et la ligne de commande (23 ; 33) interne associée de l'ensemble de lignes de commande.

12. Station de vannes électrofluidique selon l'une quelconque des revendications précédentes, **caractérisée en ce que** la station de bus (10 ; 30) et le groupe de vannes (19, 20, 24) au moins au nombre de un sont respectivement réalisés comme des composants de modules.
